Europäisches Patentamt

European Patent Office

Office européen des brevets

(19)

(11) Numéro de publication : **0 479 647 A1**

(12)

# DEMANDE DE BREVET EUROPEEN

(21) Numéro de dépôt : **91402556.4**

(51) Int. Cl.⁵ : **F16H 7/12**

(22) Date de dépôt : **25.09.91**

(30) Priorité : **04.10.90 FR 9012342**

(43) Date de publication de la demande :
**08.04.92 Bulletin 92/15**

(84) Etats contractants désignés :
**AT BE CH DE DK ES FR GB GR IT LI LU NL SE**

(71) Demandeur : **CAOUTCHOUC MANUFACTURE
ET PLASTIQUES
143 bis, rue Yves Le Coz
F-78000 Versailles (FR)**

(72) Inventeur : **Stamm, Philippe
32, route d'Avril
F-58300 Decize (FR)**
Inventeur : **Lardrot, Eric
41 Route de l'Etang, Sauvigny-les-bois
F-58160 Imphy (FR)**
Inventeur : **Mayau, David
Rue Virlogeux, Résidence Saint-Privé
F-58300 Decize (FR)**

(54) **Galet tendeur fonctionnant par cisaillement autour d'un centre de rotation fictif et présentant une double rigidité par l'intervention d'une butée.**

(57)  Galet tendeur pour transmission par lien souple fonctionnant par adhérence mécanique, porté par un levier tendeur (1) soumis à un couple élastique de torsion d'un sandwich circulaire (5) amorti par friction d'une rondelle de friction (9) soumise à la précontrainte axiale dudit sandwich, l'un et l'autre pivotant en détente autour d'un centre de rotation (C), fictif, et en accroissement de tension autour d'une butée (11), les deux rigidités procurées de part et d'autre de la valeur nominale étant dans un rapport au moins égal à deux.

# FIG.1

EP 0 479 647 A1

L'invention est du domaine des galets tendeurs pour transmissions fonctionnant par adhérence mécanique entre lien souple et poulies, telles que celles assurant l'entraînement des accessoires sur les moteurs d'automobile ou sur les machines industrielles ; elle utilise le cisaillement d'un sandwich plan d'élastomère, solidaire d'armatures rigides, pour assurer la pression du galet sur une courroie par application d'une force élastique.

Les transmissions par lien souple, fonctionnant par adhérence mécanique sur poulies, que la surface d'entraînement du lien souple soit plate, trapézoïdale ou multistries, nécessitent un moyen de tension élastique pour permettre ladite adhérence mécanique du lien souple, qui est communément appelé dans ce cas "courroie".

Le terme de "galet tendeur" est utilisé lorsque la raideur intrinsèque élevée de l'armature longitudinale dans des courroies, constituée de matériaux câblés de grande rigidité tels que le polyester, la fibre de verre ou l'aramide, exige une tension permanente établie par poussée élastique sur un galet de renvoi, le plus commodément disposé en appui sur la face lisse constituant le dos de la courroie. Les variations de dilatation thermique des différents constituants, mais surtout toutes variations élastiques instantanées ou modifications permanentes de la longueur du périmètre de la courroie, dues à l'usure ou au fluage, même faibles, sont compensées par les déplacements du moyen élastique de tension du galet tendeur.

Les galets tendeurs par pivotement d'un bras sur un axe et tension élastique par ressort métallique sont de nombreux types, avec ou sans moyens d'amortissement.

Des moyens intégrant les deux fonctions - tension et amortissement - dans une bague d'élastomère sont décrits par le brevet US 4 144 772 de THE TORO COMPANY et les documents GB 2 070 724 de ALAN CRESLEY PRITCHARD et EP 0 157 193 de RIV-SKF. Tous ont en commun le rappel élastique par torsion d'une bague d'élastomère, avec l'inconvénient d'assurer également le pivotement sur la matière élastomérique, ce qui permet également le basculement sphérique - le terme de "conique" est alors utilisé - dont les variations angulaires perturbent le centrage de la courroie sur la poulie du galet tendeur.

Une amélioration de cette situation est apportée par l'usage d'une bague assez longue, solidaire d'armatures concentriques et précontraintes, telles que celles décrites dans les documents US 3 975 965 de DAYCO CORPORATION et EP 0 114 779 de CAOUTCHOUC MANUFACTURE ET PLASTIQUES, qui diffèrent par le moyen de réglage de la tension, celle-ci se faisant par rotation de la bague interne.
Dans ces deux TYPES DE dispositifs, l'amortissement - qui reste faible - est assuré par le seul caractère visco-élastique d'un élastomère.

Par ailleurs, CAOUTCHOUC MANUFACTURE ET PLASTIQUES, demanderesse de la présente, a proposé, par le document FR 2 640 016 un remède beaucoup plus radical aux risques de basculement conique par rapport à l'axe de rotation, en faisant assurer le couple de rappel par la déformation d'un sandwich plan d'élastomère précontraint et l'amortissement des variations dynamiques par friction d'une rondelle soumise à ladite précontrainte. Ainsi, les couples de basculement s'appliquent à travers des solides en appui glissant, dans de bien meilleures conditions qu'à travers une couche d'élastomère, aussi précontrainte soit-elle.

Le fonctionnement est le même que dans le dispositif décrit dans le document CH 318 686 de BAECHEN où des plaques de caoutchouc sont précontraintes entre deux plateaux.

Dans les dispositifs précédents, les déplacements dynamiques sont rappelés par une rigidité unique d'un élément élastomérique et l'amortissement n'est assuré qu'à force constante par le frottement de surfaces équipées de garnitures de friction appropriées.

Un amortissement dissymétrique, sous forme de frottement, fait l'objet des documents FR 2 591 700 et FR 2 611 018 de SKF, EP 0 294 919 de LITENS AUTOMOTIVE et DE 3 637 103 de INA WOLZLAGER. Un amortissement hydraulique, également dissymétrique est assuré par le dispositif décrit dans le document FR 2 617 556 de HUTCHINSON.

Dans l'ensemble de ces dispositifs, la tension demeure assurée par des ressorts métalliques, mais les dispositions mettent en évidence un besoin de dissymétrie dans la variation dynamique de tension, nécessairement plus raide dans l'accroissement de tension et qui demande à être plus souple dans le sens de la détente. Les valeurs prédéterminées de ce type d'amortissement, par friction ou hydraulique, bien que dissymétriques - ne résolvent pas tous les problèmes résultant de débattements d'amplitude variable.

L'analyse de l'art antérieur montre qu'aucun des dispositifs connus, quel que soit le type d'amortissement mis en jeu, ne procure un rappel élastique à double rigidité, dissymétrique de part et d'autre de la position de service la plus usuelle. Or, il s'avère que la double rigidité est souhaitable - voire indispensable - dans l'application concernant des moteurs, essentiellement de type Diesel, à volant allégé, où les pulsations peuvent dépasser la valeur moyenne de l'effort d'entraînement des accessoires.

Le brin du lien souple, normalement détendu, sur lequel est situé le galet tendeur, devient alors brusquement tendu et une rigidité nettement plus élevée doit intervenir pour éviter une détension brutale de l'autre brin.

L'objectif de la présente invention est de proposer, dans un galet tendeur de conception simple, le regroupement de la fonction de rappel élastique à rigidité de rappel différentiée entre l'accroissement de tension et la détente, par déformation en cisaillement d'un sandwich plan d'élastomère précontraint axialement et la fonction d'amortissement - également différenciée - par friction d'une rondelle soumise à ladite précontrainte, grâce à la rotation du dispositif autour d'un axe fictif, au cours d'une première phase de déformations, suivie par l'intervention d'une butée appelée à modifier la répartition des sollicitations, en seconde phase.

L'invention réside dans un galet tendeur pour transmission par lien souple fonctionnant par adhérence mécanique. Ledit galet tendeur est porté par un levier tendeur sur lequel s'exerce un couple élastique par cisaillement en torsion d'un sandwich circulaire plan, réalisé en composition élastomérique, solidaire d'armatures rigides, et soumise à une précontrainte axiale permettant d'amortir les variations de tension, par friction relative de surfaces planes également soumises à ladite précontrainte axiale et dont l'appui assure la retenue au basculement hors du plan du levier tendeur.

L'invention est caractérisée en ce que la rotation du levier tendeur, cumulée à un cisaillement du sandwich circulaire, dans le même plan, se fait autour d'un centre de rotation fictif et en ce que l'entrée en contact d'une butée, au voisinage immédiat de la position de fonctionnement, permet de disposer, sur le rappel élastique du galet tendeur, de deux rigidités, nettement différentiées, l'une plus faible du côté détente et l'autre plus élevée du côté accroissement de la tension dudit lien souple, par changement du centre apparent de rotation du bras formant levier tendeur.

L'invention sera mieux comprise à la lecture de la description accompagnant les dessins, dans lesquels :
– la figure 1 est une coupe du galet tendeur selon l'invention, par un plan de symétrie du levier tendeur et du sandwich plan.
– la figure 2 est une vue de face dudit galet tendeur, perpendiculairement à l'axe de pivotement et à l'axe du galet qui lui reste parallèle.
– la figure 3 est un diagramme explicatif des efforts sur le galet tendeur et en divers points du sandwich élastique plan, placés dans la disposition de la figure 2.
– la figure 4 est un graphique des rigidités assurées, sur le galet tendeur, par l'élasticité du sandwich élastique plan.
– La figure 5 reprend en coupe axiale une image du composant caoutchouc/métal formant le sandwich élastique plan, élément essentiel du dispositif selon l'invention.

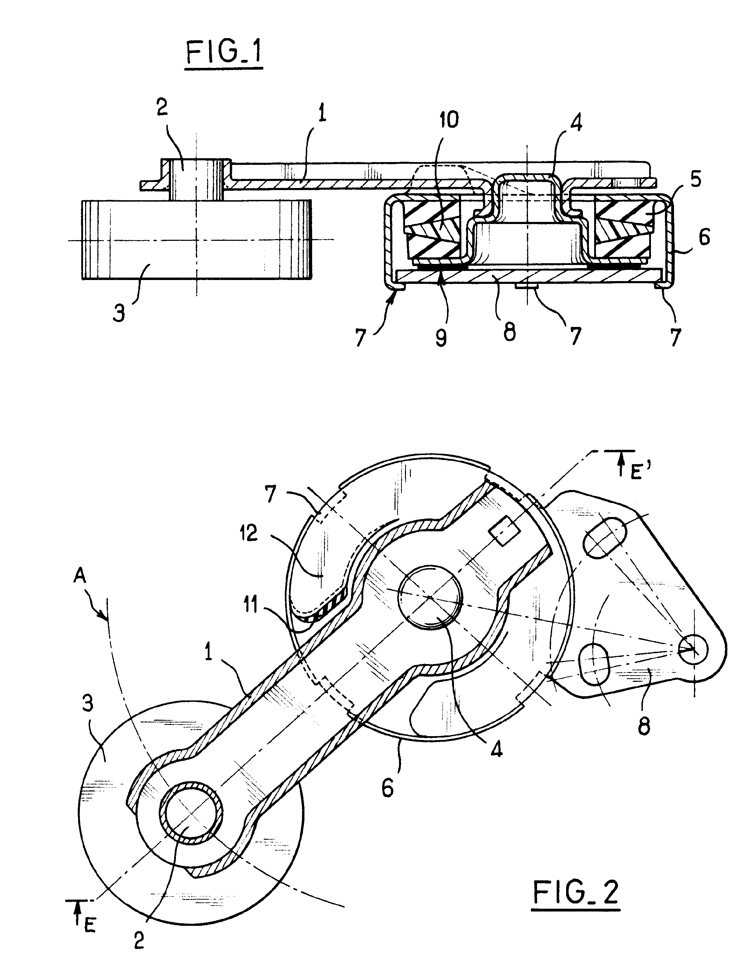

La figure 1 est une coupe du galet tendeur, sectionnant le levier tendeur et le sandwich plan dont l'ensemble constitue l'invention, coupe qui constitue le plan de symétrie du système élastique, à l'état de repos.

Le levier tendeur (1), réalisé par exemple en tôle d'acier emboutie, porte, par emmanchement de l'axe du galet (2), un galet cylindrique (3) de forme connue, monté par l'intermédiaire de roulements à billes ou à aiguilles sur l'axe du galet (2).

Le levier tendeur (1) est également solidaire, car emmanché à force, d'un axe de liaison (4), lui-même pièce de révolution réalisée en tôle d'acier emboutie ou fluotournée.

Une extrémité plane dudit axe de liaison (4) sert d'armature externe à un sandwich circulaire (5), en composition élastomérique à laquelle il est intimement lié. L'autre armature externe dudit sandwich est constituée par le fond du boîtier (6) auquel ledit sandwich circulaire (5) est également intimement lié.

Un jeu qui résulte du procédé de réalisation est utilisé pour le débattement radial qui s'avère nécessaire pour le fonctionnement du dispositif.

Le boîtier (6) est muni de pattes de sertissage (7) qui permettent de le refermer par dessus une plaque plane formant platine de fixation (8), après assemblage.

Cette fermeture se fait sous une précontrainte de compression axiale à laquelle est soumis le sandwich circulaire (5), ainsi qu'éventuellement une rondelle de friction (9), interposée à l'assemblage entre l'axe de liaison (4) et la platine de fixation (8). Ainsi, lorsque se débattent l'une par rapport à l'autre les deux armatures du sandwich circulaire (5) - à savoir, d'un côté l'axe de liaison (4) solidaire du levier tendeur (1) et, sur l'autre face, le boîtier (6) refermé sur la platine de fixation (8) - la rondelle de friction (9), soumise à la précontrainte, accompagne les déplacements relatifs et amortit, par frottement, les variations dynamiques de l'effort de tension. Pour ce faire, elle est réalisée en un matériau à coefficient de friction de valeur faible, mais peu variable, tel que du polytétrafluorure de vinyle ou du polyéthylène de très haute masse moléculaire dont le coefficient de friction est de l'ordre de 0,10 ou 0,11 avec une valeur de décollement ne dépassant pas 0,15.

Le mouvement principal de la déformation permettant le rappel élastique étant une rotation autour de l'axe de révolution du sandwich circulaire (5), les variations de cette rotation sont amorties par ledit frottement, sous l'effet permanent de la précontrainte axiale.

Ladite rondelle de friction (9) peut être remplacée par un traitement approprié de l'une des surfaces de friction en regard.

La rigidité de compression du sandwich circulaire (5) qui exerce cette précontrainte est avantageusement améliorée par l'interposition, lors de la fabrication, d'au moins une armature interne (10) pour en assurer le frettage. Ladite armature interne (10), de révolution, peut préférentiellement être réalisée en polymère rigide ou en métal que l'on sait intimement lier à la composition élastomérique du sandwich circulaire (5). Le frettage qu'elle assure, avec les modules usuels des compositions élastomériques utilisées, permet d'appliquer un taux de précontrainte de l'ordre de 10 à 25 bars qui se retrouve, ou à peu près, sur la surface de friction de la rondelle (9), ou la surface des solides qui s'y substituent, de diamètres voisins de ceux du sandwich circulaire (5).

Cette contrainte, multipliée par le coefficient de friction indiqué, permet d'exercer des efforts de frottement, parallèles à la surface, du même ordre de grandeur que ceux exercés par le cisaillement de la composition élastomérique entre ses armatures, amortissant efficacement les variations dynamiques de la tension résultante.

Dans une rotation autour de l'axe du sandwich circulaire (5), le cisaillement en un point du matériau est proportionnel à sa distance à l'axe de rotation.

L'armature interne (10) présente une forme plane, ou préférentiellement biconique, comme représenté, afin que l'épaisseur des deux éléments du sandwich circulaire (5), également proportionnelle au rayon, procure un cisaillement relatif de même valeur en chaque point.

Dans une variante non représentée, des armatures supplémentaires, également planes ou biconiques, peuvent être interposées, dans le même but.

La figure 2 est une vue de face du galet tendeur, perpendiculairement à l'axe de pivotement ainsi qu'à l'axe (2) du galet cylindrique (3). Les pièces visibles sont le levier tendeur (1) - qui, principalement, tourillonne autour de l'axe de liaison (4) auquel il est solidarisé - et le boîtier (6), presque complètement de révolution.

Ce dernier est refermé par dessus la platine de fixation (8), dont n'est visible que la partie munie de trous et boutonnières pour assurer le montage sur le carter du moteur. Les pattes de sertissage (7), en nombre quelconque mais ici représentées au nombre de quatre, assurent au sandwich circulaire une précontrainte dirigée perpendiculairement au plan de la figure.

L'axe EE'indique le plan de symétrie selon lequel est faite la coupe illustrée en figure 1.

Un arc trajectoire (A) est décrit lors du pivotement du levier tendeur (1) sous l'effet d'une force exercée orthogonalement audit levier tendeur (1), appliquée sur le galet cylindrique (3). La réaction de cisaillement qui en résulte sur le sandwich circulaire (caché) provoque une rotation proportionnelle à la valeur du couple exercé. Un même cisaillement provoque simultanément une translation - en bloc - de la composition élastomérique du sandwich circulaire, également proportionnelle à la force exercée.

Sachant que, mathématiquement, la somme d'une rotation d'un angle donné et d'une translation résulte en une rotation, seule reste à évaluer la position réelle du centre instantané de rotation, centre de l'arc trajectoire (A), peu différente du centre de l'axe de liaison (4).

Au delà de la position d'équilibre élastique voulue pour l'usage fonctionnel du galet tendeur, une butée (11) sur laquelle le levier tendeur (1) vient alors en contact est ménagée sur une excroissance (12) du boîtier (6). A part la faible élasticité de la butée (11), dont le calcul peut évaluer l'effet, le lieu d'appui du levier tendeur (1) sur celle-ci, devient centre de rotation pour ledit levier tendeur (1), rappelé élastiquement par le cisaillement combiné du sandwich circulaire (5). C'est donc une nouvelle rotation avec un bras de levier différent qui intervient alors et assure la rigidité de rappel du galet cylindrique (3) dans les variations dynamiques au delà de la position fonctionnelle d'équilibre.

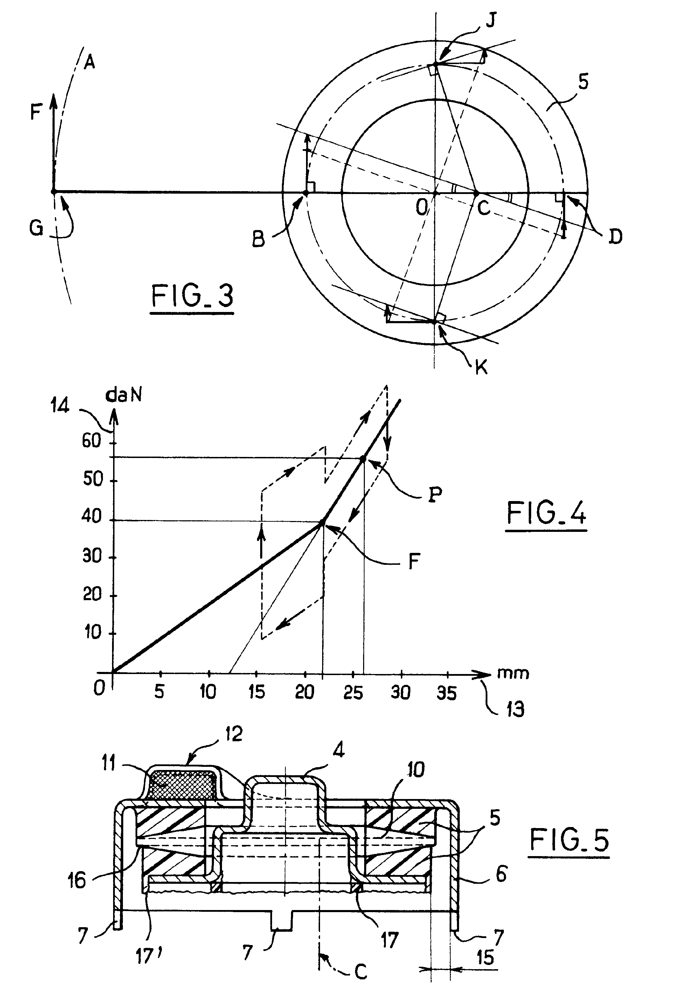

La figure 3 est un schéma reprenant, pour expliciter le fonctionnement, la géométrie des pièces visibles ou cachées sur la figure 2, dans l'exemple d'une application pratique permettant de définir les deux rigidités obtenues de part et d'autre de cette position d'équilibre.

L'application concerne un bras de levier théorique de longueur (L) entre l'axe du galet (G) où s'exerce l'effort normal de tension (F) et le centre (O) du sandwich circulaire (5).

Ledit sandwich circulaire (5) présente des diamètres extérieur (2 Re) et intérieur (2 Ri) et une largeur (a) qui, compte tenu des dépouilles assurent une section (S) - pas tout à fait constante - dans l'épaisseur de la composition élastomérique.

Il est souhaitable, pour le meilleur fonctionnement du dispositif, que sous l'effet du couple de torsion autour du centre (O) du sandwich circulaire, la rotation résultante exerce un cisaillement homogène de la composition élastomérique de section (S). Rapporté à un rayon de giration (R) - moyenne géométrique et non arithmétique des rayons extrêmes -, l'effort normal de tension (F), exercé sur l'axe du galet (G), est donc équilibré par une force de réaction totale

$$T = F \times L/R$$

répartie tout au long dudit rayon moyen; mais, en chaque point dudit sandwich circulaire, la contrainte due au couple de torsion se trouve cumulée avec celle due à la réaction monodirectionnelle (F), elle-même répartie au sein de la composition élastomérique et nécessaire pour constituer ce couple.

Les déformations du sandwich circulaire dont les rigidités de torsion et de cisaillement sont considérées comme linéaires, sont proportionnelles entre elles.

Sous une contrainte de cisaillement de $Qr = T/S$ dûe à la rotation, et de $Qt = F/S$ dûe à la translation, le point le plus sollicité (B) subit le plus grand déplacement.

Ainsi, pour une course désirée (W), à l'axe du galet tendeur (G), d'angle (U) agissant par un bras de levier de longueur (L), le cisaillement de torsion de la composition élastomérique, exercé autour du centre du sandwich (O), est UxR, celui dû à la force de réaction nécessaire pour former un couple se traduit par une translation (Y), s'exerçant en direction opposée à ladite force de réaction, donc dans le sens de l'effort normal de tension (F).

Au point le plus sollicité (B), les deux forces se cumulent ; le taux de cisaillement résultant Qr+Qt est donc dû à une déformation (UxR)+Y.

Au point le moins sollicité (D), les deux forces sont de sens opposés et donc soustractives. Le taux de contrainte est Qr-Qt et la déformation est limitée à (UxR)-Y.

De même, aux points extrêmes (J) et (K), les déplacements résultent d'une somme vectorielle des déplacements perpendiculaires UxR et Y. Il est facile d'en déduire que la déformation résultante en tout autre point s'effectue par rotation autour d'un centre (C), fixe pour toute valeur de la déformation au niveau de l'axe du galet tendeur (G).

La distance dudit centre de rotation (C) au centre du sandwich (O) se déduit de l'équation :

$$\frac{BC}{CD} = \frac{Qr+Qt}{Qr-Qt} = \frac{(UxR)+Y.}{(UxR)-Y}$$

Le déplacement du levier (GO) rapporté à l'axe du galet tendeur (G) est donc une rotation autour d'un bras de levier supérieur à la longueur (L) pour la même force (F), représentant l'effort normal de tension ; le déplacement de l'axe du galet tendeur (G) est égal à UL+Y, ce qui entraine une flexibilité supérieure à la valeur initialement recherchée.

Dans une application numérique pour un moteur de type DIESEL, l'effort normal de tension (F) vise une valeur de 40 daN. Elle s'applique sur un bras de levier théorique (GO) de longueur L=100 mm. Les diamètres extérieur (2 Re) et intérieur (2 Ri) du sandwich circulaire, respectivement de 74 mm et 42 mm, et la largeur a = 16 mm assurent une section de la composition élastomérique de l'ordre de 30 cm2. Il s'en déduit la valeur du rayon de giration R=30 mm.

En ce qui concerne l'équilibre des forces, la force de réaction totale (T), répartie tout au long dudit rayon de giration (R), prend donc la valeur de 133 daN. Par conséquent, la contrainte de cisaillement due à la rotation (Qr) est de 4,43 daN/cm2 et la contrainte de cisaillement dûe à la translation (Qt) est de 1,33 daN/cm2.

Au point le plus sollicité (B), la contrainte cumulée (Qr+Qt) est donc de 5,76 daN/cm2.

Au point le moins sollicité (D), la contrainte résultante (Qr-Qt) prend la valeur de 3,10 daN/cm2.

Aux points extrêmes (J) et (K), la composition vectorielle des contraintes conduit à la valeur de 4,70 daN/cm2.

Ainsi, pour la course désirée (W) de 20 mm, le cisaillement dû à la torsion du sandwich circulaire est UxR=6 mm et la translation (Y) est de 1,8 mm.

Au point le plus sollicité (B), les déformations se cumulent pour atteindre 7,8 mm.

Au point le moins sollicité (D), la déformation est limitée à 4,2 mm.

Aux points extrêmes (J) et (K), la composition vectorielle de ces déformations conduit à la valeur de 6,25 mm.

Pour assurer au dispositif une bonne tenue à la fatigue en service, un cisaillement relatif de la composition élastomérique de 48 % au point le plus sollicité (B) - où la déformation est de (UxR)+Y = 7,8 mm -, est obtenu à condition que l'épaisseur moyenne de ladite composition élastomérique du sandwich circulaire soit de 16,25 mm. Ladite épaisseur moyenne est celle de la composition élastomérique au niveau du rayon de giration (R), l'épaisseur étant variable en raison de la forme biconique de l'armature interne, dans cette variante.

Tous les points de la composition élastomérique sont sollicités à ce même taux de 48 % dans le cas qui sera l'état limite pratique d'utilisation.

Dans un matériau dont la réponse en déformation est proportionnelle à la force appliquée, ce qui est le cas de la composition élastomérique du sandwich circulaire dans le domaine de sollicitation, la contrainte de cisaillement au point le plus sollicité (B) Qr+Qt = 5,76 daN/cm2 correspond à 48 % du module YERZLEY de la composition élastomérique qui doit donc avoir une valeur de 12 daN/cm2, ce qui s'obtient par une formulation appropriée de ladite composition élastomérique portant, en particulier sur le choix de la nature et de la proportion de charge renforçante, le plus souvent constituée de noir de carbone.

Au point le moins sollicité (D), lorsqu'est appliquée l'effort normal de tension (F), la contrainte de cisaillement Qr-Qt se limite à 3,10 daN/cm2 et le cisaillement relatif (UxR)-Y est alors de 26 %. Par ailleurs, dans l'état limite pratique d'utilisation, en ce même point, ces grandeurs atteignent les valeurs indiquées pour le point le plus sollicité (B).

Ces niveaux de sollicitations - sensiblement constantes au point (B) et limitées à cette valeur maximale pour les autres points - correspondent aux conditions les plus favorables à une grande durée de vie de la composition élastomérique du sandwich circulaire, donc de l'ensemble du dispositif.

La distance du centre de rotation (C) au centre (O) est de 9 mm, car la longueur (BC) est de 39 mm et la longueur (CD) est de 21 mm. Le bras de levier réel est donc de 109 mm et la flexibilité se trouve accrue de 9 % par rapport à la valeur initialement recherchée.

L'arc trajectoire (A) a donc pour centre, le centre de rotation (C), sa position dépendant des caractéristiques géométriques du levier et du sandwich circulaire. La butée (11) a pour fonction une entrée en contact avec le levier tendeur (1) à une valeur choisie, par exemple la valeur correspondant à l'effort normal de tension (F) et son rôle est de limiter la contrainte exercée au point le plus sollicité (B). Les contraintes et les déformations n'y sont, dès lors, plus dépassées lorsque le galet est repoussé par le lien souple, au delà de son point d'équilibre.

En effet, les réactions complémentaires à l'effort normal de tension (F), exercées par le lien souple sur l'axe du galet tendeur (G), provoquent une rotation supplémentaire du levier tendeur (1), autour du point le plus sollicité (B), au voisinage immédiat de la butée. La conséquence en est un accroissement des contraintes et des déformations en tous les autres points qui sont moins sollicités. En particulier, il est légitime de choisir, comme état limite pratique,- pouvant être exceptionnellement dépassé - le cas où la contrainte et la déformation, au point le moins sollicité (D), atteignent les valeurs maintenues constantes au point le plus sollicité (B).

La somme mathématique de deux rotations étant une rotation, il est facile de démontrer qu'à cet état limite pratique, déformations et contraintes sont les mêmes en tous points du sandwich circulaire : la rotation résultant du passage de l'état initial à cet état limite pratique, est alors une rotation géométrique autour du centre du sandwich (O).

Tout point du sandwich circulaire situé au rayon moyen de 30 mm, est sollicité au même taux de cisaillement 48 %, soit 5,76 daN par cm2 et subit une déformation de 7,8 mm. Il s'en déduit que le déplacement de l'axe du galet tendeur (G) se trouve être de 26 mm au delà de l'état initial.

Lorsque le centre de torsion est reporté au centre du sandwich (O), la réaction sur l'axe du galet tendeur (G) est somme de la force normale de tension (F) exercée sous une première rigidité du dispositif correspondant à 21,8 mm de déformation pour 40 daN (résultant du bras de levier réel de 109 mm) et d'une réaction variable exercée sur la butée au point le plus sollicité (B). Pour la valeur considérée comme état limite pratique, ladite réaction passe par :

$$\frac{40 \times \overline{BO}}{\overline{GB}} = 17,2 \text{ daN}$$

lorsque le déplacement différentiel est :

$$\frac{1,8 \times \overline{GB}}{\overline{BO}} = 4,2 \text{ mm}$$

sur l'axe du galet tendeur (G).

La première rigidité du dispositif se trouve donc être de 1,84 daN par mm et la seconde, après mise en action de la butée (11) de 4,08 daN par mm, soit dans un rapport de 2,22 particulièrement favorable à l'objectif recherché. Au cours de la rotation supplémentaire, la réaction sur le lien souple exercée par l'axe du galet tendeur passe par une valeur de 57,2 daN à la course de 26 mm, valeurs qui peuvent être choisies comme état limite pratique dynamique pouvant être exceptionnellement dépassé.

La figure 4 est un graphique rappelant simplement ces rigidités qui dépendent des données géométriques, essentiellement le rapport entre le rayon moyen du sandwich circulaire et la longueur du levier tendeur.

Si la butée (11) présentait une flexibilité propre notable au point le plus sollicité (B), ladite flexibilité viendrait abaisser la seconde rigidité du dispositif, par addition des deux flexibilités concernées. Pour celà il faut considérer la variation de l'effort exercé entre la valeur dite "nominale" au début du premier contact, sans effort, du levier tendeur (1) sur la butée (11) et la valeur trouvée dans le cas de l'état limite pratique, somme de 40 daN exercés au centre du sandwich (O) et 17,2 daN, de valeur supplémentaire, exercés sur l'axe du galet tendeur (G).

Il est logique que soit retrouvé au point le plus sollicité (B) l'effort réel de 57,2 daN, exercé sur l'axe du galet tendeur (G). En effet, dans cette circonstance, le sandwich circulaire n'est plus soumis qu'à un couple de torsion pure, exercé sur le segment (GB), couple égal à l'effet des efforts exercés en sens opposés, aux extrêmités du segment (GO).

Cette remarque explicite l'effet des dispositions géométriques relatives des composants : si le galet tendeur se trouve rapproché du sandwich circulaire (segment (GB) de faible longueur), la seconde rigidité devient plus élevée, tandis que la première rigidité se trouve réduite par l'effet du cisaillement. Le centre réel de déformation au cours de la première rotation qui est le centre de rotation (C) est alors éloigné du centre du sandwich (O).

La position limite pour ce centre de rotation (C) serait le point le moins sollicité (D), où la déformation serait nulle, car alors l'axe du galet (G) serait confondu avec la butée (11) au point le plus sollicité (B), annulant toute efficacité de la rotation et ramenant le fonctionnement du dispositif à celui des moyens élastiques selon l'art antérieur.

Les dispositions géométriques relatives des composants donnent le moyen de moduler les deux rigidités représentées par les pentes des droites sur le graphique de la figure 4.

Sur l'axe des abscisses est portée la course de déplacement du galet cylindrique (3), sur l'arc trajectoire (A). En toute rigueur, ledit arc trajectoire (A) est constitué d'un arc de rayon 109 mm (rayon GC) parcouru par l'axe du galet tendeur (G) sur la course 21,8 mm, prolongé par un arc de rayon 70 mm (rayon GB), lors des variations dynamiques de position.

La zone utile depuis le point (F) est de 4,2 mm, jusqu'à l'état limite pratique représenté par le point (P) sur le graphique, position exceptionnellement dépassée par l'axe du galet tendeur (G) (en parcourant, au delà, l'arc de rayon GB). Les valeurs portées sur l'axe des abscisses (13) sont donc la mesure (en mm) d'arcs curvilignes parcourus sur la trajectoire définie par l'ensemble des deux parties de l'arc trajectoire (A).

L'axe des ordonnées (14) porte la valeur des réactions résultantes, par exemple de niveau 40 daN pour la valeur correspondant à l'effort normal de tension (F) et 57,2 daN pour l'état limite pratique représenté par le point (P). Les pentes des segments (OF) et (FP) représentent les rigidités du rappel élastique correspondant, de rapport 2,22 dans l'application numérique citée.

Les variations dynamiques de position du galet tendeur, de part et d'autre du point de fonctionnement privilégié où s'applique l'effort normal de tension (F), sont, bien évidemment, amorties par le frottement de la rondelle de friction (9). Or celle-ci, soumise à une précontrainte élastique de valeur constante, pivote sous l'effet de la première loi de rigidité autour du centre de rotation (C), alors que sa rotation s'effectue, sous l'effet de la seconde loi de rigidité, plus élevée, autour du point le plus sollicité (B), situé sur la surface de friction.

Le couple de friction dépend des dimensions réelles de la rondelle de friction, généralement plus faibles que celle du sandwich circulaire ; les valeurs dudit couple de friction sont estimées être dans un rapport de deux entre l'état de plus faible rigidité, en rotation autour du centre de rotation (C) et l'état où le dispositif pivote autour du point le plus sollicité (B), appartenant à la surface de friction.

Le cycle fléché, représenté en traits discontinus, situe l'effet de l'amortissement par friction, au cours d'une oscillation de part et d'autre du point d'application de la force normale de tension (F), en considérant qu'une friction constante s'oppose au mouvement ; sa valeur absolue est égale à la moitié du rappel élastique en rotation autour du centre de rotation (C) et égale au quart dudit rappel élastique lorsque la rotation s'effectue autour du point le plus sollicité (B).

La figure 5 reprend, en coupe axiale, une image du composant caoutchouc/métal formant l'essentiel du dispositif selon l'invention. Les armatures rigides, intimement liées à la composition élastomérique pour former le sandwich circulaire (5) sont constituées de l'axe de liaison (4), de révolution, et du boîtier (6), lui-même sensiblement de révolution, à l'exception des pattes de sertissage (7) et de l'excroissance (12).

Un jeu circonférentiel (15) est ménagé entre la surface externe de la composition élastomérique et la surface interne du boîtier (6) pour permettre aux débattements nécessaires de se produire autour du centre de rotation (C), différent de l'axe de révolution, mais éloigné de seulement 9 mm avant l'entrée en jeu de la butée (11) dans l'application développée.

Le composant caoutchouc/métal comporte, également, un épaulement (16) de retenue de l'armature interne (10).

La butée (11), adaptée au contact sur la tranche de la tôle emboutie en forme de U, du levier tendeur (1) est portée par une excroissance (12) du boîtier (6) et doit avoir une rigidité elevée. Elle doit donc, par exemple, être réalisée par une pellicule de composition élastomérique de faible épaisseur et de bonne résistance aux sollicitations dynamiques, comme celle du sandwich circulaire.

Un procédé de fabrication préférentiel du dispositif selon l'invention comprend les phases de moulage du composant caoutchouc/métal selon les procédés classiques de l'industrie de transformation du caoutchouc, et d'assemblage des composants.

– Préalablement au moulage dudit élément caoutchouc/métal, les armatures rigides, réalisées en tôle d'acier emboutie ou fluotournée, ainsi que l'armature interne préférentiellement réalisée en polyamide, renforcé ou non, sont enduites, sur les faces utiles, des colles appropriées pour assurer une liaison intime physico-chimique au cours de la réticulation de la composition élastomérique ;

– la composition élastomérique, mise en oeuvre au cours du moulage, est choisie pour une bonne résistance à la fatigue et au fluage, dans les conditions d'utilisation, c'est à dire sous précompression permanente, avec un cisaillement plafonné à une valeur constante au point le plus sollicité. Ledit cisaillement prend une valeur inférieure et variable, en tout autre point du matériau ;

le jeu circonférentiel (15) est déterminé par la dépouille nécessaire au démoulage du composant caoutchouc-/métal.

L'épaulement (16) est utilisé, pendant le moulage, pour le maintien en position de l'armature interne (10) ; des surépaisseurs (17'), réalisées au cours du moulage, servent de joints pour le maintien de la rondelle de friction (9) par son diamètre extérieur ;

la réalisation de la butée (11) résulte, avantageusement, du flux de composition élastomérique, provenant du sandwich circulaire, par une communication ménagée dans la paroi du boîtier (6), au droit de l'excroissance (12).

– L'assemblage des composants est réalisé sous précompression du sandwich circulaire, contrôlée par la mesure de l'écrasement géométrique relatif de sa composition élastomérique. Pour une épaisseur moyenne de 16,25 millimètres dans l'exemple pratique considéré, une valeur de précompression de 10 %, soit 1,6 mm, constitue un ordre de grandeur maximal admissible. Les pattes de sertissage sont alors rabattues, de façon à maintenir la hauteur du sandwich circulaire à la valeur correspondante en enfermant la rondelle de friction.

– L'emmanchement à force du levier tendeur (1) sur l'axe de liaison (4) assure son orientation relative par rapport à la platine de fixation. Ledit levier tendeur (1) porte le galet cylindrique et son axe, préalablement emmanché dans un alésage pratiqué lors de l'emboutissage.

– Une opération complémentaire, facultative, qui s'avère intéressante consiste, après ces emmanchements à exercer le couple élastique tendeur contrôlé en usine ; le levier tendeur (1) se trouve alors en appui temporaire sur la butée (11) et la réaction est exercée par la mise en place d'une goupille amovible, située, dans la région opposée, au point le moins sollicité (D) - qui devient le point le plus sollicité au cours de cette situation temporaire.

Un perçage simultané du levier tendeur (1) et du boîtier (6), lorsque le couple nominal est exercé, permet la mise en place de la goupille.

– Le réglage sur la chaîne de montage se limite, dans ce cas, à mettre en appui le galet cylindrique sur le lien souple et à libérer la contrainte par retrait de la goupille.

Le galet tendeur à double rigidité et à centre fictif, selon l'invention, présente par rapport aux dispositifs connus de l'art antérieur les avantages suivants :

– il assure la tension élastique par sollicitation d'une composition élastomérique dans les meilleures conditions possibles d'utilisation, ladite tension étant plafonnée au point le plus sollicité, afin d'assurer une longue durée de vie au galet tendeur ;

– l'amortissement y est assuré par friction constante sur des surfaces peu sollicitées, bien protégées de toute pollution et est donc peu susceptible de variations ;

– les composants en sont simples et de peu d'exigences géométriques, donc de coût limité vu les grandes séries possibles, des leviers tendeurs de longueur variée ou des tensions différentes pouvant être communs à plusieurs applications.

– les variations de température ont un effet favorable, correcteur de la tension : le module de la composition élastomérique, accru par le froid, augmente la réaction lorsque les entraxes risqueraient de se contracter, et, abaissé par les hautes températures, il compense la surtension éventuellement due aux dilatations d'entraxe.

## Revendications

1. Galet tendeur pour transmission par lien souple fonctionnant par adhérence mécanique, porté par un levier tendeur (1) sur lequel s'exerce un couple élastique par cisaillement en torsion d'un sandwich circulaire (5), plan, en composition élastomérique solidaire d'armatures rigides et soumise à une précontrainte axiale permettant d'amortir les variations de tension par friction relative de surfaces planes également soumises à ladite précontrainte axiale, et dont l'appui assure la retenue au basculement hors du plan du levier tendeur (1), ledit galet tendeur étant caractérisé en ce que sa rotation cumulée à un cisaillement dans le même plan du sandwich circulaire se fait d'abord autour d'un centre de rotation (C) fictif, et en ce que l'entrée en contact d'une butée (11) au voisinage immédiat de la position de fonctionnement permet de disposer sur le rappel élastique du galet tendeur (3) de deux rigidités nettement différentiées, l'une plus faible du côté détente et l'autre plus élevée du côté accroissement de la tension dudit lien souple, par changement du centre apparent de rotation du bras formant levier tendeur (1).

2.	Galet tendeur pour transmission par lien souple selon la revendication 1, caractérisé en ce que la précontrainte axiale du sandwich circulaire (5) est exercée entre la platine de fixation (8) et le fond du boîtier (6) par le rabattement des pattes de sertissage (7), la contrainte s'exerçant à travers une rondelle de friction (9) qui suit les rotations relatives des deux solides qui l'enserrent, servant d'armatures adhérisées au sandwich circulaire (5), dans chacun de ses mouvements de rotation, amortissant ainsi par friction les variations dynamiques de la tension exercée sur le lien souple.

3.	Galet tendeur selon l'une des revendications 1 ou 2, caractérisé en ce que la rigidité axiale du sandwich circulaire (5) est accrue par l'interposition d'au moins une armature interne (10), cette disposition permettant d'exercer, sur les surfaces planes en friction relative ou sur la rondelle de friction (9) des contraintes de compression axiale au moins dix fois supérieures aux contraintes de torsion élastique dans le sandwich circulaire (5) qui leur sont perpendiculaires.

4.	Galet tendeur selon la revendication 3, caractérisé en ce que chaque armature interne (10) est plane.

5.	Galet tendeur selon la revendication 3, caractérisé en ce que la ou les armatures internes (10) sont biconiques.

6.	Galet tendeur selon l'une des revendications 1 à 5, caractérisé en ce que le rapport des rigidités exercées sur l'axe du galet tendeur (G) par la rotation autour du centre de rotation (C) fictif du côté détente et par la rotation autour du contact de la butée (11), du côté accroissement de la tension, est au moins égal à deux.

## FIG_1

## FIG_2

FIG_3

FIG_4

FIG_5

**EP 0 479 647 A1**

Office européen
des brevets

**RAPPORT DE RECHERCHE EUROPEENNE**

Numero de la demande

EP    91 40 2556

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| A | DE-A-3 724 963 (WOCO)<br>* abrégé; figures 1-4 *<br>--- | 1 | F16H7/12 |
| A | US-A-4 925 437 (SUZUKI)<br>* abrégé; figure 5 *<br>--- | 1 | |
| D,A | EP-A-0 373 056 (CAOUTCHOUC MANUFACTURE)<br>* abrégé; figure 2 *<br><br>----- | 1-4 | |

| | DOMAINES TECHNIQUES RECHERCHES (Int. Cl.5 ) |
|---|---|
| | F16H |

Le présent rapport a été établi pour toutes les revendications

| Lieu de la recherche | Date d'achèvement de la recherche | Examinateur |
|---|---|---|
| LA HAYE | 13 JANVIER 1992 | FLORES E. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)